(19) **Europäisches Patentamt / European Patent Office / Office européen des brevets**

(11) **EP 4 092 581 B1**

(12) **EUROPEAN PATENT SPECIFICATION**

(45) Date of publication and mention
of the grant of the patent:
**02.04.2025 Bulletin 2025/14**

(21) Application number: **20919013.1**

(22) Date of filing: **14.02.2020**

(51) International Patent Classification (IPC):
**G06N 3/08** *(2023.01)* **G06N 20/00** *(2019.01)*
**G06N 3/047** *(2023.01)* **H04L 9/40** *(2022.01)*
**G06N 3/0455** *(2023.01)*

(52) Cooperative Patent Classification (CPC):
**G06N 3/0455; G06N 3/047; G06N 3/0475;
G06N 3/088; H04L 63/1425**

(86) International application number:
**PCT/JP2020/005908**

(87) International publication number:
**WO 2021/161538 (19.08.2021 Gazette 2021/33)**

(54) **LEARNING DEVICE, LEARNING METHOD, AND LEARNING PROGRAM**

LERNVORRICHTUNG, LERNVERFAHREN UND LERNPROGRAMM

DISPOSITIF D'APPRENTISSAGE, PROCÉDÉ D'APPRENTISSAGE ET PROGRAMME
D'APPRENTISSAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.11.2022 Bulletin 2022/47**

(73) Proprietor: **Nippon Telegraph And Telephone
Corporation
Chiyoda-ku
Tokyo 100-8116 (JP)**

(72) Inventor: **YAMANAKA, Yuki
Musashino-shi, Tokyo 180-8585 (JP)**

(74) Representative: **Hoffmann Eitle
Patent- und Rechtsanwälte PartmbB
Arabellastraße 30
81925 München (DE)**

(56) References cited:
**JP-A- 2019 220 892    JP-A- 2019 220 892**

- **KANAGAWA MOTONOBU ET AL: "Filtering with
State-Observation Examples via Kernel Monte
Carlo Filter", NEURAL COMPUTATION., vol. 28,
no. 2, 22 October 2015 (2015-10-22), US, pages
382 - 444, XP055848149, ISSN: 0899-7667,
Retrieved from the Internet <URL:https://arxiv.
org/pdf/1312.4664v4.pdf> DOI: 10.1162/
NECO_a_00806**
- **LIM SWEE KIAT ET AL: "DOPING: Generative
Data Augmentation for Unsupervised Anomaly
Detection with GAN", 2018 IEEE
INTERNATIONAL CONFERENCE ON DATA
MINING (ICDM), IEEE, 17 November 2018
(2018-11-17), pages 1122 - 1127, XP033485646,
DOI: 10.1109/ICDM.2018.00146**
- **ALI BORJI: "Pros and Cons of GAN Evaluation
Measures", ARXIV.ORG, CORNELL UNIVERSITY
LIBRARY, 201 OLIN LIBRARY CORNELL
UNIVERSITY ITHACA, NY 14853, 9 February 2018
(2018-02-09), XP081195653**
- **KANAGAWA MOTONOBU, NISHIYAMA YU,
GRETTON ARTHUR, FUKUMIZU KENJI:
"Filtering with State-Observation Examples via
Kernel Monte Carlo Filter", ARXIV:1312.4664V4,
22 October 2015 (2015-10-22), pages 382 - 444,
XP055848149, Retrieved from the Internet
<URL:https://arxiv.org/abs/1312.4664v4>
[retrieved on 20200626]**

EP 4 092 581 B1

- LECUYER, MATHIAS ET AL.: "Pyramid: Enhancing Selectivity in Big Data Protection with Count Featurization", PROCEEDINGS OF THE 2017 IEEE SYMPOSIUM ON SECURITY AND PRIVACY, 26 May 2017 (2017-05-26), pages 78 - 95, XP033108088, ISBN: 978-1-5090-5533-3, DOI: 10.1109/SP.2017.60

**Description**

[Technical Field]

The present invention relates to a learning device, a learning method, and a learning program.

[Background Art]

With the advent of the IoT (Internet of Things) era, various types of devices (IoT devices) have come to be connected to the Internet and used in various ways. Traffic session anomaly detection systems and intrusion detection systems (IDS) for IoT devices are being actively researched as security measures for such IoT devices.

One example of such an anomaly detection system uses a probability density estimator obtained by unsupervised learning, such as a VAE (Variational Auto Encoder). When the probability density estimator performs anomaly detection, high-dimensional data for learning, called traffic feature amounts, is generated from actual communication, and the features of normal traffic are learned using such features in order to be able to estimate the probability of occurrence of a normal communication pattern. Thereafter, the trained model is used to calculate the probability of normal communication pattern occurrence for each type of communication session, and a type of communication session that has a small probability of normal communication pattern occurrence is detected as an anomaly. For this reason, it is possible to detect an anomaly without knowing all malignant conditions, and it is also possible to deal with unknown cyber attacks.

[Citation List]

[Non Patent Literature]

[NPL 1] Y. Chen, M. Welling and A. Smola, "Super-Samples from Kernel Herding", In Proceedings of the 26th Conference on Uncertainty in Artificial Intelligence (UAI), pp. 109-116, (2010).

[Patent Literature]

[PL 1] JP 2019 220892 A describes a traffic session anomaly detection and intrusion detection for IoT devices. A detection device acquires a piece of information relevant to communication of an IoT device. The detection device calculates output data by inputting a piece of data representing characteristics of the information relevant to the communication into a generation model for generating a piece of output data on the basis of a latent variable that is a random variable following a Gaussian mixture distribution and the input data. The detection device calculates the anomaly score on the basis of the output data, and when the anomaly score exceeds a threshold value, detects an abnormality of the IoT device.

[Summary of the Invention]

[Technical Problem]

When using an anomaly detection system that employs a probability density estimator in actual operation, the anomaly detection system needs to ascertain what sort of features of communication tend to be considered to be normal. However, the learning-targeted IoT devices in the anomaly detection system perform a wide variety of types of communication, and it is difficult to ascertain the tendencies of such communication.

Specifically, IoT devices perform communication with use of various protocols depending on the type of device, and even if focus is placed on communication by one HTTP protocol, some types of communication such as WebSocket continue for a long time, and other types of communication such as page loading end very quickly, or in other words, even communication by one protocol can have various characteristics. The traffic feature amounts serving as learning data generated from such types of communication are therefore also diverse, and it is also difficult to ascertain tendencies in such traffic feature amounts for learning by merely performing statistical processing such as average value or median value calculation. If the tendencies of traffic feature amounts for learning cannot be ascertained, the anomaly detection system cannot ascertain what kind of features of communication are considered to be normal, and therefore even if the anomaly detection system detects an anomaly, the reason for detecting the anomaly cannot be understood, and interference with operation is conceivable.

The present invention has been made in view of the above, and an object of the present invention is to provide a learning device, a learning method, and a learning program capable of providing data for ascertaining a tendency of traffic feature amounts for learning.

[Means for Solving the Problem]

The present invention is defined by the independent claims. Preferred embodiments are defined by the dependent claims.

Further aspects are provided for facilitating the understanding of the invention.

[Effects of the Invention]

According to the present invention, it is possible to provide data for ascertaining a tendency of traffic feature amounts for learning.

[Brief Description of Drawings]

[Fig. 1]

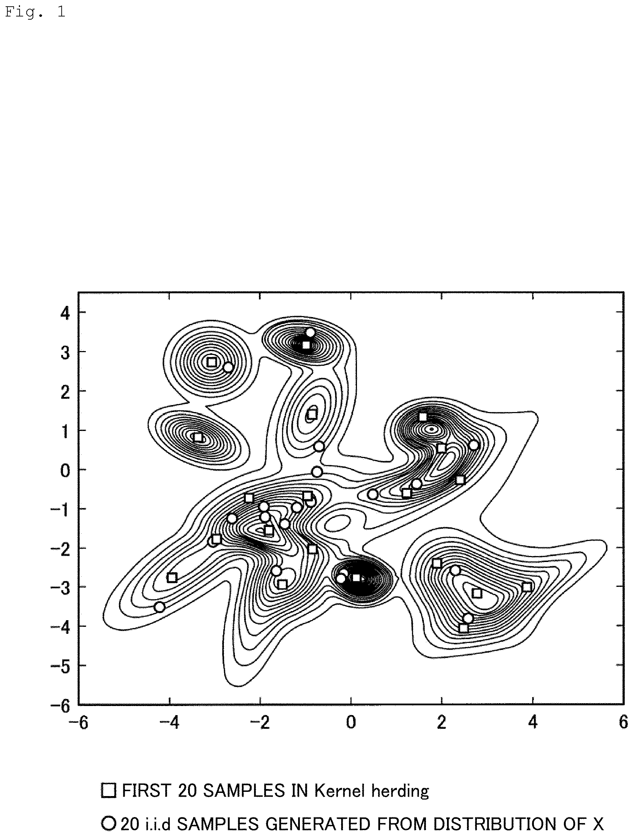

Fig. 1 is a diagram showing the results of a comparative experiment regarding normal random sampling and sampling by kernel herding in a mixed Gaussian distribution.
[Fig. 2]

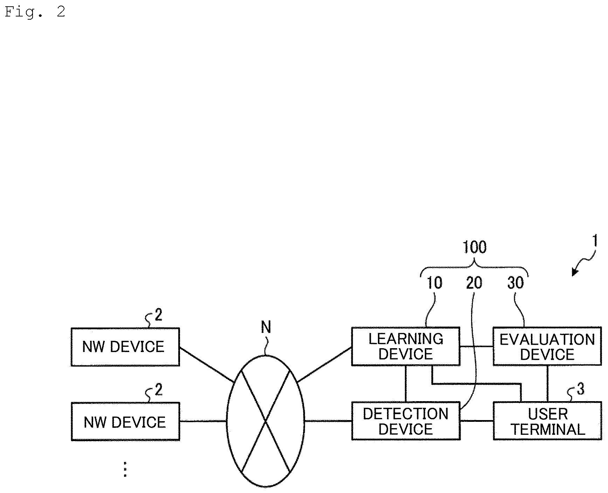

Fig. 2 is a block diagram showing an example of the configuration of a communication system according to an embodiment.
[Fig. 3]

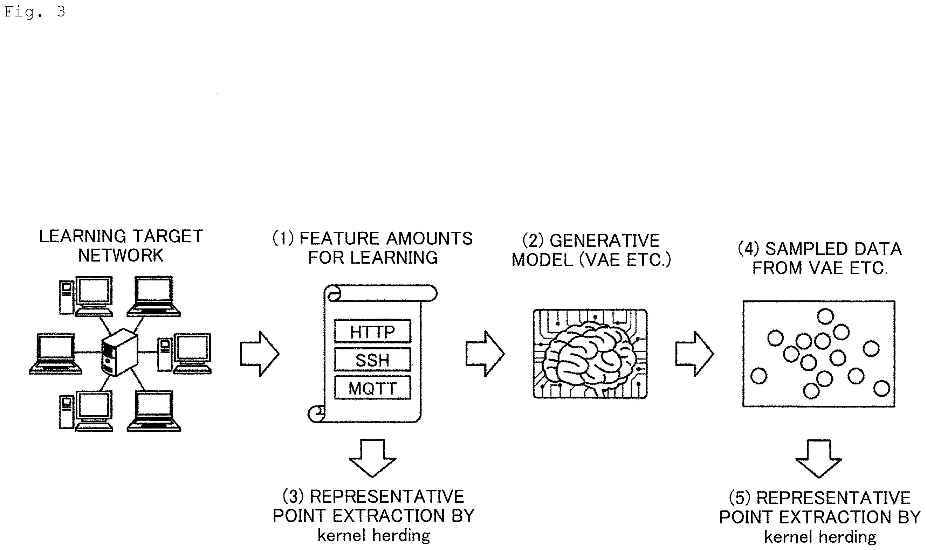

Fig. 3 is a diagram illustrating a processing flow of a detection system according to the embodiment.
[Fig. 4]

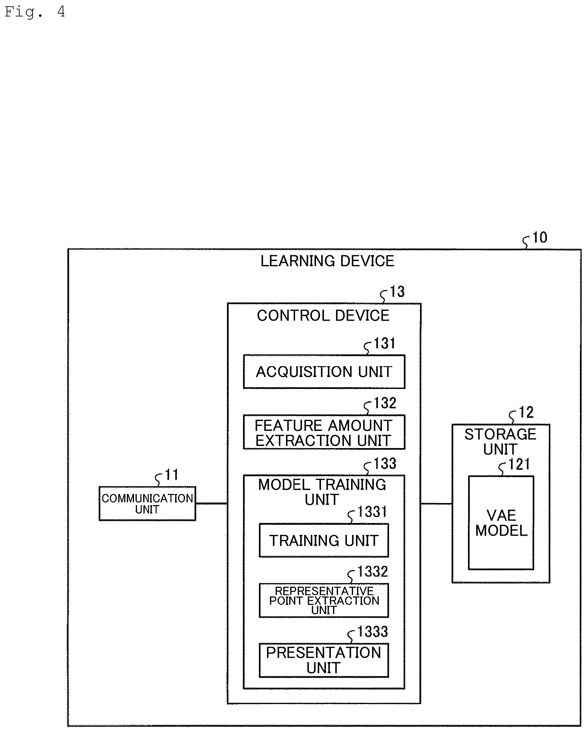

Fig. 4 is a diagram showing an example of the configuration of a learning device.
[Fig. 5]

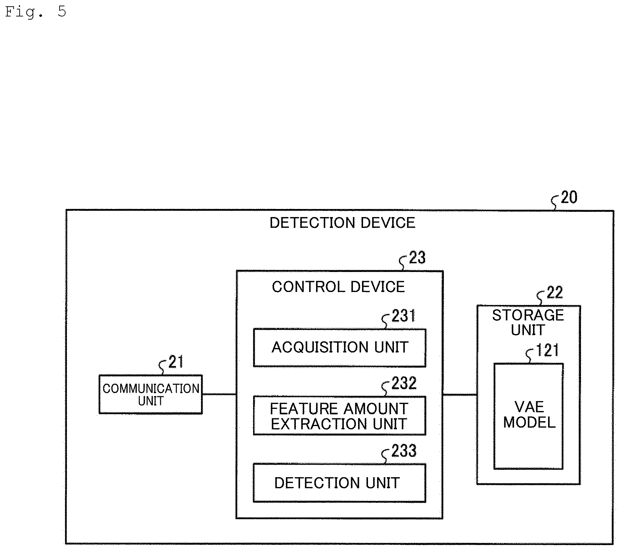

Fig. 5 is a diagram showing an example of the configuration of a detection device.
[Fig. 6]

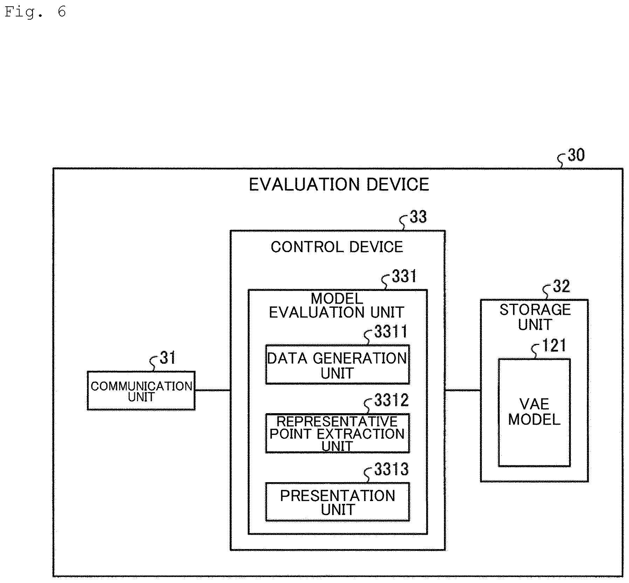

Fig. 6 is a diagram showing an example of the configuration of an evaluation device.
[Fig. 7]

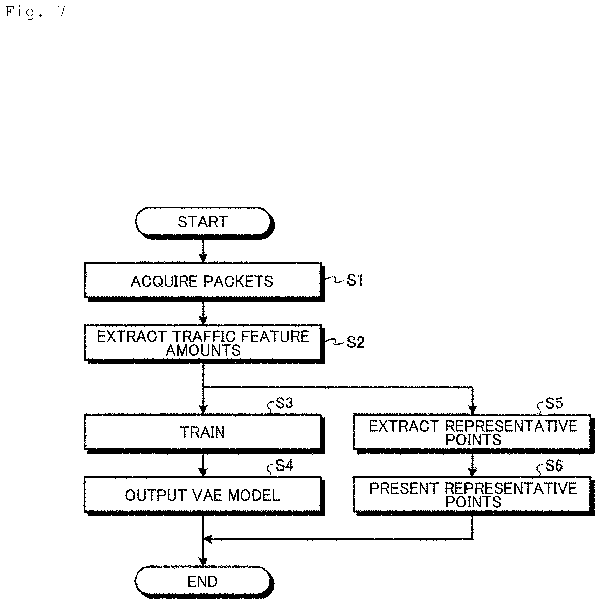

Fig. 7 is a flowchart showing a processing procedure of learning processing according to the embodiment.
[Fig. 8]

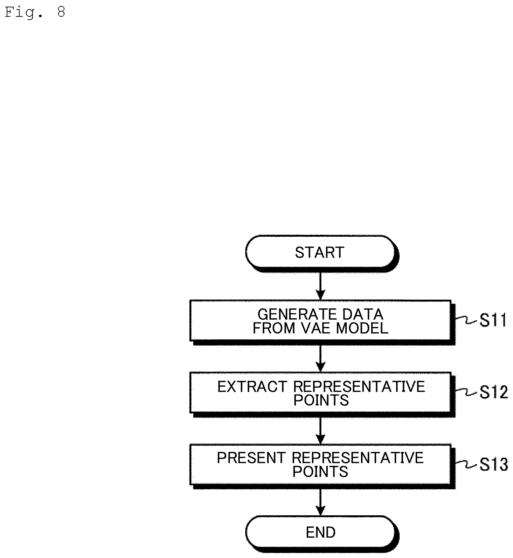

Fig. 8 is a flowchart showing a processing procedure of evaluation processing executed by the evaluation device.
[Fig. 9]

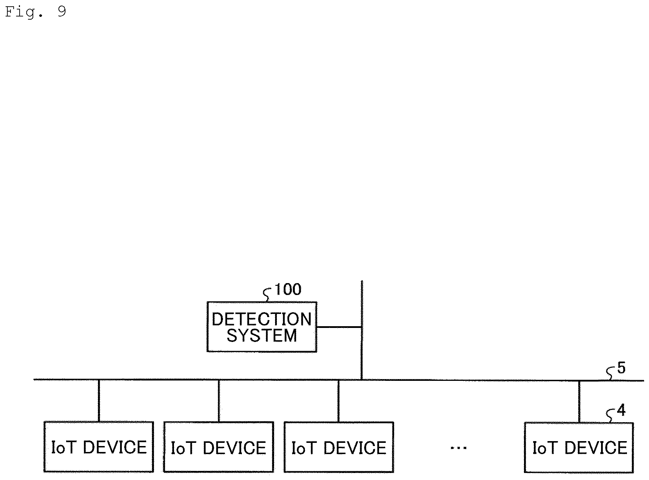

Fig. 9 is a diagram illustrating an example of application of the detection system according to the embodiment.
[Fig. 10]

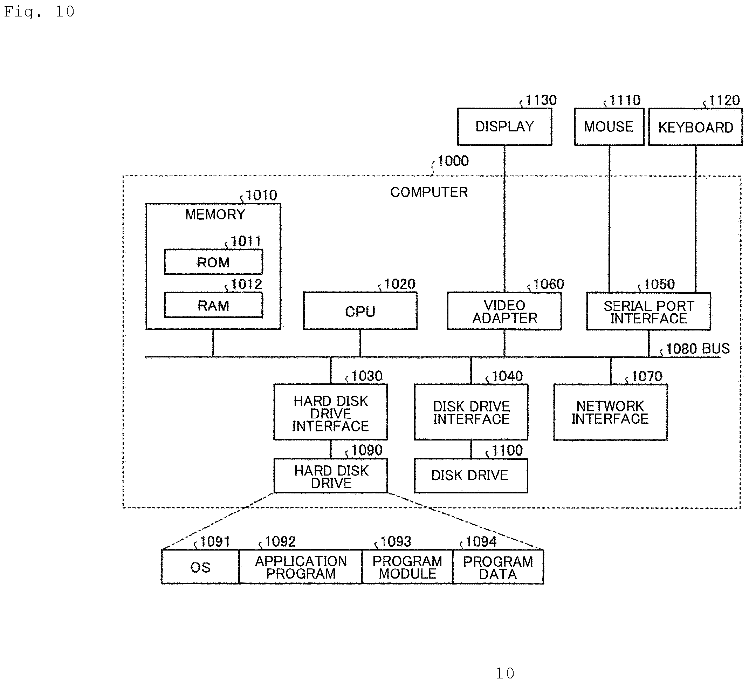

Fig. 10 is a diagram showing an example of a computer in which the detection system is realized by executing a program.

[Description of Embodiments]

Hereinafter, an embodiment of the present invention will be described in detail with reference to the drawings. Note that the present invention is not intended to be limited to this embodiment. Also, in the drawings, like portions are denoted by like reference signs. In the following, the denotation "^A" for A, which is a vector, a matrix, or a scalar, is intended to be equivalent to "A with ^ directly above".

[Embodiment] In the present embodiment, information for ascertaining the tendency of traffic feature amounts for learning is provided by extracting representative points of traffic feature amounts for learning by using a kernel method called kernel herding. Also, in the present embodiment, when a generative model such as VAE is used as the probability density estimator, data is generated by the generative model and kernel herding is used to extract representative points of generated data in order to provide information for ascertaining what kind of communication the generative model actually considers to be normal.

[kernel herding] First, kernel herding will be described. Here, kernel herding has been proposed as an algorithm for finding a sample sequence that efficiently approximates a kernel mean $m_x$ with a kernel sample mean $(1/T) \sum_t \Phi(xt)$ (see NPL 1). In kernel herding, a sample sequence $\{xt\}$ is sequentially obtained according to the update equations shown in Expressions 1 and 2 below.

[Math. 1]

$$\mathrm{x}_{t+1} = argmax_x < h_t, \Phi(x_t) > \qquad \cdots (1)$$

[Math. 2]

$$\mathrm{h}_{t+1} = h_t + m_X - \Phi(x_{t+1}) \qquad \cdots (2)$$

Here, $m_x$ is the kernel average of the data set X shown in Expression 3. Also, $\Phi(\bullet)$ is a feature map. Moreover, $<\bullet,\bullet>$ is an inner product in the reproducing kernel Hilbert space associated with a positive-definite kernel.
[Math. 3]

$$\mathrm{X} = \{x_i\}_{i=1}^n \qquad \cdots (3)$$

However, in general, the kernel average $m_x$ cannot be calculated directly. In view of this, when actually executing the kernel herding algorithm, the kernel average is replaced with a sample kernel average $\hat{m}=(1/N)\Sigma_n\Phi(x_n)$ approximated with a sufficiently large sample (Expressions 4 and 5).
[Math. 4]

$$\mathrm{x}_{t+1} = argmax_x < h_t, \Phi(x_t) > \qquad \cdots (4)$$

[Math. 5]

$$\mathrm{h}_{t+1} = h_t + \hat{m} - \Phi(x_{t+1}) \qquad \cdots (5)$$

It is experimentally known that even if this replacement is performed, an efficient sample can be obtained by kernel herding (see NPL 1).

In the present embodiment, kernel herding is used as a technique for extracting representative points from a data set. If the positive-definite kernels used in the calculation are characteristic, the kernel average $m_x$ approximated by kernel herding contains complete information about the distribution of the data set X (see Expression 3).

For this reason, a sample sequence that approximates the kernel average $m_x$, which was obtained by kernel herding, with a small number of data points can be regarded as a set of representative points of data set X. Fig. 1 (cited from NPL 1) is a diagram showing the results of a comparative experiment regarding ordinary random sampling and sampling by kernel herding in a mixed Gaussian distribution. As shown in Fig. 1, it can be seen that, in comparison with random sampling, sampling by kernel herding can qualitatively extract representative data points.

In the present embodiment, a method is proposed in which an anomaly detection system ascertains a traffic tendency that is considered to be normal by extracting representative points of traffic feature amounts for learning.

[Configuration of anomaly detection system] The following describes a communication system in the present embodiment. Fig. 2 is a block diagram showing an example of the configuration of the communication system according to this embodiment. As shown in Fig. 2, a communication system 1 according to this embodiment has a configuration in which a plurality of network (NW) devices 2 and a detection system 100 are connected via a network N. The detection system 100 communicates with a user terminal 3 that is used by the network administrator or the like.

The NW devices 2 each sample packets in traffic that is the target of anomaly detection. The NW devices 2 transfer the sampled packets to the detection system 100 via the network N.

In the detection system 100, the presence or absence of a communication anomaly is detected using a generative model that has been trained with traffic feature amounts by unsupervised learning based on packets received from the NW devices 2, and the detection result is transmitted to the user terminal 3 used by a system administrator. The detection system 100 includes a learning device 10, a detection device 20, and an evaluation device 30.

Note that the generative model is a probability density estimator such as a VAE. Due to learning traffic feature amounts, the VAE can output an anomaly score when given a traffic feature amount. If noise is input to an intermediate layer, VAE outputs an output distribution that corresponds to the input noise.

The learning device 10 trains the generative model with traffic feature amounts by unsupervised learning based on packets received from the NW devices 2. The learning device 10 also uses kernel herding to extract representative points of traffic feature amounts for learning, and outputs the extracted representative points to the user terminal 3 as data for evaluating the progress of the generative model.

The detection device 20 detects the presence or absence of a communication anomaly in traffic subject to anomaly detection, by using the generative model whose model parameters were optimized by the learning device 10.

The evaluation device 30 generates pieces of data from the generative model that was trained by the learning device 10, extracts representative points from the pieces of data using kernel herding, and outputs the extracted representative points to the user terminal 3 as data for evaluating the degree of progress of the generative model. Specifically, the evaluation device 30 inputs noise to an intermediate layer of the VAE, samples data from an output distribution that corresponds to the noise, and acquires the sampled data as data generated by the generative model. The data generated by this generative model corresponds to the data that can be considered to be normal when the generative model is used as a probability density estimator.

[Processing flow of detection system] Next, a processing flow will be described with reference to Fig. 3. Fig. 3 is a diagram illustrating a processing flow of the detection system 100 in this embodiment.

As shown in Fig. 3, the learning device 10 extracts traffic feature amounts for learning based on packets collected via the NW devices that are learning targets (see (1) in Fig. 3), and trains a generative model such as a VAE using the extracted traffic feature amounts (see (2) in Fig. 3). Additionally, the learning device 10 extracts representative points of the traffic feature amounts for learning by kernel herding (see (3) in Fig. 3).

It is assumed that the data set of traffic feature amounts for learning basically contains only normal communication. A probability density estimator (generative model) such as a VAE is used in the learning device 10, and it learns traffic feature amounts that the detection system 100 considers to be normal, based on the aforementioned data set. Accordingly, the representative points of the traffic feature amounts for learning correspond to traffic feature amounts that the detection system 100 considers to be normal. In the learning device 10, representative communication feature amounts can be automatically extracted by using kernel herding, and the NW administrator can ascertain network tendencies based on the extracted feature amounts.

Also, in the detection system 100, the evaluation device 30 creates a data set by generating a large number of pieces of data using the trained generative model. The evaluation device 30 uses kernel herding to extract representative points (see (5) in Fig. 3) from sampled data from the VAE or the like (see (4) in Fig. 3) .

In this way, the evaluation device 30 can extract representative communication learned by the VAE. The data generated by the generative model corresponds to data that the detection system 100 considers to be normal when the generative model is used as a probability density estimator. By using kernel herding, the evaluation device 30 can more directly ascertain traffic feature amounts that the detection system 100 considers to be normal.

The NW administrator can ascertain a tendency of the traffic feature amounts for learning based on the representative points extracted by the learning device 10. The kernel herding application method in the learning device 10 is useful when there is a desire to ascertain a network tendency via representative points of traffic feature amounts.

Also, the NW administrator can ascertain what kind of features of communication are actually considered by the generative model to be normal based on the representative points extracted by the evaluation device 30. In other words, the NW administrator can ascertain whether the generative model can generate appropriate data. The kernel herding application method in the evaluation device 30 is useful when there is a desire to ascertain what traffic feature amounts are considered to be normal for the detection system 100 as a whole including the probability density estimator.

The NW administrator then evaluates the progress of the generative model using the difference between the representative points extracted by the learning device 10 and the representative points extracted by the evaluation device 30. For example, if the difference between the representative points extracted by the learning device 10 and the representative points extracted by the evaluation device 30 is less than a predetermined value, it is deemed that the training of the generative model is proceeding appropriately, whereas if the difference is larger than the predetermined value, it is deemed that the training of the generative model is not progressing appropriately. As a result, the NW administrator can ascertain at the feature amount level whether or not the generative model has been properly trained.

[Learning device] Next, the configurations of devices in the detection system 100 will be described. First, the learning device 10 will be described. Fig. 4 is a diagram showing an example of the configuration of the learning device 10. As shown in Fig. 4, the learning device 10 includes a communication unit 11, a storage unit 12, and a control unit 13.

The communication unit 11 is a communication interface for transmitting and receiving various types of information to and from other devices connected via a network or the like. The communication unit 11 is realized by an NIC (Network Interface Card) or the like, and performs communication with other devices (e.g., the detection device 20 and the evaluation device 30) and the control unit 13 (described later) via a telecommunication line such as a LAN (Local Area Network) or the Internet. For example, the communication unit 11 connects to an external device via a network or the like, and receives an input of traffic packets that are to be used in learning.

The storage unit 12 is realized by a semiconductor memory element such as a RAM (Random Access Memory) or a flash memory (Flash Memory), or a storage device such as a hard disk or an optical disk, and stores a processing program for operation of the learning device 10, data used during execution of the processing program, and the like. The storage unit 12 includes a VAE model 1211.

The VAE model 121 is a generative model that learns feature amounts of communication data. The VAE model 121 learns traffic feature amounts for learning. The VAE model 121 is a probability density estimator and learns features of the probability density of communication data for learning. The VAE model 121 receives a certain data point $x_i$ and outputs an anomaly score that corresponds to that data. Letting the estimated value of probability density be $p(x_i)$, the anomaly score is an approximation of $-\log p(x_i)$. Accordingly, the higher the anomaly score output by the VAE is, the higher the degree of anomaly of the communication data is.

The control unit 13 includes an internal memory for storing required data and programs that define various processing procedures, and executes various types of processing using such programs and data. For example, the control unit 13 is an electronic circuit such as a CPU (Central Processing Unit) or an MPU (Micro Processing Unit). The control unit 13 includes an acquisition unit 131, a feature amount extraction unit 132, and a model training unit 133.

The acquisition unit 131 acquires a plurality of pieces of communication data for learning. Specifically, the acquisition unit 131 acquires a large number of packets for learning via the NW devices 2 that are used for learning.

The feature amount extraction unit 132 extracts feature amounts of the pieces of communication data acquired by the acquisition unit 131. The feature amount extraction unit 132 performs statistical processing on a large number of packets for learning and generates traffic feature amounts, which are high-dimensional data.

The model training unit 133 trains the VAE model 121 using the traffic feature amounts that were extracted by the feature amount extraction unit 132. The model training unit 133 also uses kernel herding to extract representative points of feature amounts of the pieces of communication data used in learning. The model training unit 133 includes a training unit 1331, a representative point extraction unit 1332, and a presentation unit 1344.

The training unit 1331 trains the VAE model 121 with the feature amounts of the communication data extracted by the feature amount extraction unit 132. The training unit 1331 trains the VAE model 121 with probability density features of the communication data. The training unit 1331 optimizes the parameters of the VAE model 121 using the traffic feature amounts generated by the feature amount extraction unit 132. The training unit 1331 outputs the trained VAE model 121 to the detection device 20 and the evaluation device 30 via the communication unit 11.

The representative point extraction unit 1332 uses kernel herding to extract representative points of feature amounts of the pieces of communication data for learning. The representative point extraction unit 1332 uses kernel herding to extract representative points from the data set of traffic feature amounts for learning that were generated by the feature amount extraction unit 132.

The presentation unit 1333 presents the representative points of the feature amounts of the communication data for learning to the NW administrator by outputting the representative points extracted by the representative point extraction unit 1332 to the user terminal 3 via the communication unit 11.

[Detection device] Next, the detection device 20 will be described. Fig. 5 is a diagram showing an example of the configuration of the detection device 20. As shown in Fig. 5, the detection device 20 includes a communication unit 21, a storage unit 22, and a control unit 23.

The communication unit 21 has functions similar to those of the communication unit 11 shown in Fig. 4, and performs the input and output of information and communication with other devices (e.g., the learning device 10).

The storage unit 22 has functions similar to those of the storage unit 12 shown in Fig. 4. The storage unit 22 has the VAE model 121. The VAE model 121 is a model that has been trained by the learning device 10.

The control unit 23 has functions similar to those of the control unit 13 shown in Fig. 4, and performs overall control of the detection device 20. The control unit 23 functions as various processing units by the execution of various programs. The control unit 23 includes an acquisition unit 231, a feature amount extraction unit 232, and a detection unit 233.

The acquisition unit 231 acquires communication data for which detection is to be performed. Specifically, the acquisition unit 131 acquires detection target packets via the NW devices 2 that capture packets of detection target traffic.

The feature amount extraction unit 232 has functions similar to those of the feature amount extraction unit 132, and generates traffic feature amounts from the detection target packets that were acquired by the acquisition unit 231.

The detection unit 233 uses the VAE model 121 to detect the presence or absence of an anomaly in the detection target traffic. The detection unit 233 inputs the traffic feature amounts generated by the feature amount extraction unit 232 to the VAE model 121, and acquires an output anomaly score. If the anomaly score is higher than a predetermined value, the detection unit 233 detects that the detection target communication data is abnormal. Also, if the anomaly score is less than or equal to the predetermined value, the detection unit 233 detects that the detection target communication data is normal.

[Evaluation device] Next, the configuration of the evaluation device 30 will be described. Fig. 6 is a diagram showing an example of the configuration of the evaluation device 30. As shown in Fig. 6, the evaluation device 30 includes a communication unit 31, a storage unit 32, and a control unit 33.

The communication unit 31 has functions similar to those of the communication unit 11 shown in Fig. 4, and performs the input and output of information and communication with other devices (e.g., the learning device 10).

The storage unit 32 has functions similar to those of the storage unit 12 shown in Fig. 4. The storage unit 32 has the VAE model 121. The VAE model 121 is a model that has been trained by the learning device 10.

The control unit 33 has functions similar to those of the control unit 13 shown in Fig. 4, and performs overall control of the evaluation device 30. The control unit 33 functions as various processing units by the execution of various programs. The control unit 33 has a model evaluation unit 331.

The model evaluation unit 331 presents, to the NW administrator, data for evaluating what kind of features of communication are actually considered to be normal by the generative model. The model evaluation unit 331 has a data generation unit 3311, a representative point extraction unit 3312, and a presentation unit 3313.

The data generation unit 3311 generates pieces of data from the VAE model 121, which is a generative model. The data generation unit 3311 inputs noise to an intermediate layer of the VAE model 121, and acquires an output distribution that corresponds to the noise from the output of the VAE model 121.

The representative point extraction unit 3312 uses kernel herding to extract representative points of the pieces of data generated by the data generation unit 3311.

The presentation unit 3313 presents the representative points of the feature amounts of the data generated by the VAE model 121 to the NW administrator by outputting the representative points extracted by the representative point extraction unit 3312 to the user terminal 3 via the communication unit 31.

[Learning processing] Next, a learning method executed by the learning device 10 will be described. Fig. 7 is a flowchart showing a processing procedure of learning processing according to the embodiment.

As shown in Fig. 7, the learning device 10 acquires a plurality of packets for learning (step S1) and extracts traffic feature amounts of the acquired packets (step S2).

The learning device 10 performs learning processing to train the VAE model 121 with the traffic feature amounts (step S3), and outputs the trained VAE model 121 to the detection device 20 and the evaluation device 30 (step S4).

Then, the learning device 10 uses kernel herding to extract representative points from the data set of the traffic feature amounts for learning (step S5), and outputs the extracted representative points to the user terminal 3 in order to present the representative points of the traffic feature amounts for learning to the NW administrator (step S6).

[Evaluation processing] Next, an evaluation method executed by the evaluation device 30 will be described. Fig. 8 is a flowchart showing a processing procedure of evaluation processing executed by the evaluation device 30.

The evaluation device 30 generates pieces of data from the VAE model 121, which is a generative model (step S11). The evaluation device 30 uses kernel herding to extract representative points of the data generated in step S11 (step S12).

The evaluation device 30 presents, to the NW administrator, the representative points of the feature amounts of the data generated by the VAE model 121 by outputting the representative points that were extracted in step S12 to the user terminal 3 (step S13).

[Working Example] In one example, the detection system 100 in the present embodiment can be applied to IoT device anomaly detection. Fig. 9 is a diagram illustrating an example of application of the detection system 100 according to the embodiment. As shown in Fig. 9, the detection system 100 is provided in a network 5 to which a plurality of IoT devices 4 are connected. In this case, the detection system 100 collects traffic session information transmitted and received by the IoT devices 4, learns the probability densities of normal traffic sessions, and detects an abnormal traffic session.

In the detection system 100, the model training unit 133 receives packets for learning, and outputs, to the detection device 20 and the evaluation device 30, a learned VAE model that has been trained with traffic feature amounts of the received packets.

[Experiment] Representative points were actually extracted using kernel herding from a data set of traffic feature amounts for learning. Specifically, a data set was created so as to include a mixture of two types of communication (temperature information transmission (500 sessions) by MQTT (Message Queue Telemetry Transport) and video distribution (300 sessions) by RTMP (Real-Time Messaging Protocol)), and kernel herding was used to extract representative points. The results are shown in Table 1.

[Table 1]

(Table 1)

| | Session duration | RTT | Uplink bytes | Uplink packets | Average uplink packet size | Downlink bytes | Downlink packets | Average downlink packet size |
|---|---|---|---|---|---|---|---|---|
| 0 | 0.004024 005 | 3.40E-05 | 444.9488 053 | 6.999961 53 | 0.042382 621 | 273.1487 946 | 5.016208 547 | 0.036240 339 |
| 1 | 6395.625 498 | -0.023162 473 | 57509869 5.4 | 3259833. 564 | 0.119873 613 | 16921230 6 | 3279636. 917 | 0.033581 497 |

The first row of Table 1 shows the results of extracting representative points of communication by MQTT. Checking the actual data set shows that about 90% of the communication is 444 bytes or 445 bytes of uplink communication, the number of packets is 7, and the average packet size is $0.04\times1500$ bytes, which closely matches representative points extracted manually.

The second row of Table 1 shows the results of extracting representative points of RTMP communication. When the actual data was checked visually, considerable variation was seen, but the average session duration was about 6500 seconds, and the average upstream packet size was about $0.119\times1500$ bytes, which closely matches representative points extracted manually.

In this way, it was confirmed that traffic feature amounts extracted manually (specifically, by an experienced system manager) closely matched traffic feature amounts automatically extracted using kernel herding.

[Effects of embodiment] As described above, the learning device 10 according to the present embodiment extracts feature amounts of a plurality of pieces of communication data and trains a generative model with the feature amounts of the communication data.

The learning device 10 also uses kernel herding to extract representative points of the feature amounts of the communication data, and outputs the extracted representative points to the user terminal 3 so as to provide the NW administrator with data for ascertaining a tendency of the traffic feature amounts for learning.

As a result, based on the representative points of the feature amount of the communication data, the NW administrator can ascertain the feature amounts that the VAE model 121 considers to be normal, and furthermore can ascertain a network tendency based on the representative points of the feature amounts of the communication data.

Also, as shown in the above-described experimental results, traffic feature amounts automatically extracted using kernel herding according to the present embodiment closely matched traffic feature amounts extracted manually. Therefore, according to the present embodiment, representative points of traffic feature amounts for learning can be appropriately extracted using kernel herding instead of being extracted manually, thus making it possible to alleviate the burden on the system administrator. Also, according to the present embodiment, representative points of traffic feature amounts for learning are appropriately extracted and output as data. For this reason, such data can be used by anyone to analyze network feature amounts based on the feature amounts, and it is possible to reduce the amount of skilled worker labor.

Also, the evaluation device 30 according to the present embodiment generates pieces of data from the VAE model 121, uses kernel herding to extract representative points of the generated data, and outputs the extracted representative points to the user terminal 3.

Based on the representative points extracted by the evaluation device 30, the NW administrator can ascertain what kind of features of communication are actually considered to be normal by the VAE model 121. In other words, the NW administrator can ascertain whether or not the VAE model 121 can generate good data.

Therefore, according to the present embodiment, the NW administrator can qualitatively ascertain the traffic feature amounts that are considered to be normal for the detection system 100 as a whole, including the VAE model 121.

Then by using the difference between the representative points extracted by the learning device 10 and the representative points extracted by the evaluation device 30, the NW administrator can ascertain the progress of the VAE model 121 at the feature amount level.

[System configuration, etc.] The constituent elements of the illustrated devices are functional concepts and do not necessarily need to be physically configured as shown in the figures. In other words, the specific manner of distribution/integration of the devices is not limited to the examples shown in the figures, and all or some of the devices can be functionally or physically distributed or integrated into any number of devices according to various load and usage conditions. Also, the processing functions performed by the devices can be realized by a CPU and a program analyzed and executed by the CPU, or can be realized as hardware through wired logic.

Further, all or some of the processing described in the present embodiment as being performed automatically can be performed manually, and all or some of the processing described in the present embodiment as being performed manually can be performed automatically using a known method. Also, the processing procedures, control procedures, specific names, and information including the various types of data and parameters shown in the above description and drawings can be changed as desired unless otherwise specified.

[Program] Fig. 10 is a diagram showing an example of a computer in which the detection system 100 is realized by the execution of a program. The computer 1000 includes a memory 1010 and a CPU 1020, for example. The computer 1000 also includes a hard disk drive interface 1030, a disk drive interface 1040, a serial port interface 1050, a video adapter 1060, and a network interface 1070. These parts are connected to each other by a bus 1080.

The memory 1010 includes a ROM (Read Only Memory) 1011 and a RAM 1012. The ROM 1011 stores a boot program such as a BIOS (Basic Input Output System), for example. The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to a mouse 1110 and a keyboard 1120, for example. The video adapter 1060 is connected to a display 1130, for example.

The hard disk drive 1090 stores an OS (Operating System) 1091, an application program 1092, a program module 1093, and program data 1094, for example. Specifically, a program that defines the processing of the detection system 100 is implemented as the program module 1093 that describes computer-executable code. The program module 1093 is stored in the hard disk drive 1090, for example. For example, the program module 1093 for executing processing similar to the functional configuration in the detection system 100 is stored in the hard disk drive 1090. Note that the hard disk drive 1090 may be replaced with an SSD (Solid State Drive).

Also, setting data used in the processing of the above-described embodiment is stored as the program data 1094 in the memory 1010 or the hard disk drive 1090, for example. The CPU 1020 reads the program module 1093 and the program data 1094 stored in the memory 1010 or the hard disk drive 1090 to the RAM 1012 and executes the program as needed.

Note that the program module 1093 and the program data 1094 are not limited to being stored in the hard disk drive 1090, and may be stored in a removable storage medium or the like and read by the CPU 1020 via the disk drive 1100 or the like. Alternatively, the program module 1093 and the program data 1094 may be stored in another computer connected via a network (LAN or WAN (Wide Area Network), for example). The program module 1093 and the program data 1094 may be read by the CPU 1020 from another computer via the network interface 1070.

Although an embodiment to which the invention made by the present inventor is applied has been described above, the present invention is not intended to be limited by the description and the drawings that form a part of the disclosure of the present invention according to the present embodiment.

[Reference Signs List]

1 Communication system
2 NW device
3 User terminal
4 IoT device
5, N Network
10 Learning device
11, 21, 31 Communication unit
12, 22, 32 Storage unit
13, 23, 33 Control unit
20 Detection device
30 Evaluation device
100 Detection system
121 VAE model
131, 231 Acquisition unit
132, 232 Feature amount extraction unit
133 Model training unit
233 Detection unit
331 Model evaluation unit
1331 Training unit
1332, 3312 Representative point extraction unit
1333, 3313 Presentation unit
3311 Data generation unit

**Claims**

1. A learning device (10) comprising:

    an acquisition unit (131) configured to acquire a plurality of pieces of communication data for learning;
    a feature amount extraction unit (132) configured to extract feature amounts of the communication data;
    a training unit (1331) configured to train a generative model with the feature amounts of the communication data, the generative model for use by a detection device (20) to detect the presence or absence of an anomaly in a detection target traffic in a network (N);
    **characterized by**

a first representative point extraction unit (1332) configured to extract representative points of the feature amounts of the communication data using kernel herding; and

an output unit (1333) configured to output the representative points extracted by the first representative point extraction unit to a user terminal (3) as data for evaluating whether the generative model has been properly trained;

a generation unit (3311) configured to generate a plurality of pieces of data from the generative model, and

a second representative point extraction unit (3312) configured to extract representative points of the generated data using kernel herding,

wherein the output unit (1333) outputs the representative points extracted by the second representative point extraction unit, and

wherein, if a difference between the representative points extracted by the first representative point extraction unit and the representative points extracted by the second representative point extraction unit is larger than a predetermined value, it is determined that the training of the generative model is not progressing appropriately and wherein, if a difference between the representative points extracted by the first representative point extraction unit and the representative points extracted by the second representative point extraction unit is smaller than the predetermined value, it is determined that the training of the generative model is progressing appropriately.

2. A learning method executed by a learning device (10), the learning method comprising the steps of:

acquiring a plurality of pieces of communication data for learning;

extracting feature amounts of the communication data;

training a generative model with the feature amounts of the communication data, the generative model for use by a detection device (20) to detect the presence or absence of an anomaly in a detection target traffic in a network (N);

**characterized by**

extracting representative points of the feature amounts of the communication data using kernel herding;

outputting the representative points to a user terminal as data for evaluating whether the generative model has been properly trained;

generating a plurality of pieces of data from the generative model, and

extracting second representative points of the generated data using kernel herding,

outputting the second representative points, and

wherein, if a difference between the representative points extracted by the first representative point extraction unit and the representative points extracted by the second representative point extraction unit is larger than a predetermined value, it is determined that the training of the generative model is not progressing appropriately and wherein, if a difference between the representative points extracted by the first representative point extraction unit and the representative points extracted by the second representative point extraction unit is smaller than the predetermined value, it is determined that the training of the generative model is progressing appropriately.

3. A learning program comprising instructions which, when executed by a computer (1000), cause the computer (1000) to execute the steps of:

acquiring a plurality of pieces of communication data for learning;

extracting feature amounts of the communication data;

training a generative model with the feature amounts of the communication data, the generative model for use by a detection device (20) to detect the presence or absence of an anomaly in a detection target traffic in a network (N);

**characterized by**

extracting representative points of the feature amounts of the communication data using kernel herding; and

outputting the representative points to a user terminal as data for evaluating whether the generative model has been properly trained;

generating a plurality of pieces of data from the generative model, and

extracting second representative points of the generated data using kernel herding,

outputting the second representative points, and

wherein, if a difference between the representative points extracted by the first representative point extraction unit and the representative points extracted by the second representative point extraction unit is larger than a predetermined value, it is determined that the training of the generative model is not progressing appropriately and wherein, if a difference between the representative points extracted by the first representative point extraction unit and the representative points extracted by the second representative point extraction unit is smaller than the predetermined value, it is determined that the training of the generative model is progressing appropriately.

**Patentansprüche**

1. Lernvorrichtung (10), umfassend:

   eine Erfassungseinheit (131), die so konfiguriert ist, dass sie eine Vielzahl von Teilen von Kommunikationsdaten zum Lernen erfasst;
   eine Einheit zur Extraktion von Merkmalsmengen (132), die so konfiguriert ist, dass sie Merkmalsmengen der Kommunikationsdaten extrahiert;
   eine Trainingseinheit (1331), die so konfiguriert ist, dass sie ein generatives Modell mit den Merkmalsmengen der Kommunikationsdaten trainiert, wobei das generative Modell zur Verwendung durch eine Erkennungsvorrichtung (20) dient, um das Vorhandensein oder das Fehlen einer Anomalie in einem Erkennungszielverkehr in einem Netzwerk (N) zu erkennen;
   **gekennzeichnet durch**
   eine erste Einheit zur Extraktion von repräsentativen Punkten (1332), die so konfiguriert ist, dass sie repräsentative Punkte der Merkmalsmengen der Kommunikationsdaten unter Verwendung von Kernel-Herding extrahiert; und
   eine Ausgabeeinheit (1333), die so konfiguriert ist, dass sie die von der ersten Einheit zur Extraktion von repräsentativen Punkten extrahierten repräsentative Punkte an ein Benutzerendgerät (3) als Daten ausgibt, um zu bewerten, ob das generative Modell ordnungsgemäß trainiert wurde;
   eine Generierungseinheit (3311), die so konfiguriert ist, dass sie eine Vielzahl von Datenteilen aus dem generativen Modell generiert, und
   eine zweite Einheit zur Extraktion von repräsentativen Punkten (3312), die so konfiguriert ist, dass sie repräsentative Punkte der generierten Daten unter Verwendung von Kernel-Herding extrahiert,
   wobei die Ausgabeeinheit (1333) die von der zweiten Einheit zur Extraktion von repräsentativen Punkten extrahierten repräsentative Punkte ausgibt und
   wobei, wenn eine Differenz zwischen den von der ersten Einheit zur Extraktion von repräsentativen Punkten extrahierten repräsentativen Punkten und den von der zweiten Einheit zur Extraktion von repräsentativen Punkten extrahierten repräsentativen Punkten größer als ein vorbestimmter Wert ist, bestimmt wird, dass das Training des generativen Modells nicht angemessen voranschreitet, und wobei, wenn eine Differenz zwischen den von der ersten Einheit zur Extraktion von repräsentativen Punkten extrahierten repräsentativen Punkten und den von der zweiten Einheit zur Extraktion von repräsentativen Punkten extrahierten repräsentativen Punkten kleiner als der vorbestimmte Wert ist, bestimmt wird, dass das Training des generativen Modells angemessen voranschreitet.

2. Lernverfahren, das von einer Lernvorrichtung (10) ausgeführt wird, wobei das Lernverfahren die folgenden Schritte umfasst:

   Erfassen einer Vielzahl von Teilen von Kommunikationsdaten zum Lernen;
   Extrahieren von Merkmalsmengen der Kommunikationsdaten;
   Trainieren eines generativen Modells mit den Merkmalsmengen der Kommunikationsdaten, wobei das generative Modell zur Verwendung durch eine Erkennungsvorrichtung (20) zur Erkennung des Vorhandenseins oder Fehlens einer Anomalie in einem Erkennungszielverkehr in einem Netzwerk (N) dient;
   **gekennzeichnet durch**
   Extrahieren von repräsentativen Punkten der Merkmalsmengen der Kommunikationsdaten unter Verwendung von Kernel-Herding;
   Ausgeben der repräsentativen Punkte an ein Benutzerendgerät als Daten zur Bewertung, ob das generative Modell ordnungsgemäß trainiert wurde;
   Generieren einer Vielzahl von Datenteilen aus dem generativen Modell und
   Extrahieren von zweiten repräsentativen Punkten der generierten Daten unter Verwendung von Kernel-Herding,
   Ausgeben der zweiten repräsentativen Punkte und wobei, wenn eine Differenz zwischen den von der ersten Einheit zur Extraktion von repräsentativen Punkten extrahierten repräsentativen Punkten und den von der zweiten Einheit zur Extraktion von repräsentativen Punkten extrahierten repräsentativen Punkten größer als ein vorbestimmter Wert ist, bestimmt wird, dass das Training des generativen Modells nicht angemessen voranschreitet, und wobei, wenn eine Differenz zwischen den von der ersten Einheit zur Extraktion von repräsentativen Punkten extrahierten repräsentativen Punkten und den von der zweiten Einheit zur Extraktion von repräsentativen Punkten extrahierten repräsentativen Punkten kleiner als der vorbestimmte Wert ist, bestimmt wird, dass das Training des generativen Modells angemessen voranschreitet.

**3.** Lernprogramm umfassend Anweisungen, die, wenn sie von einem Computer (1000) ausgeführt werden, den Computer (1000) veranlassen, die folgenden Schritte auszuführen:

Erfassen einer Vielzahl von Teilen von Kommunikationsdaten zum Lernen;
Extrahieren von Merkmalsmengen der Kommunikationsdaten;
Trainieren eines generativen Modells mit den Merkmalsmengen der Kommunikationsdaten, wobei das generative Modell zur Verwendung durch eine Erkennungsvorrichtung (20) zur Erkennung des Vorhandenseins oder Fehlens einer Anomalie in einem Erkennungszielverkehr in einem Netzwerk (N) dient;
**gekennzeichnet durch**
Extrahieren von repräsentativen Punkten der Merkmalsmengen der Kommunikationsdaten unter Verwendung von Kernel-Herding; und
Ausgeben der repräsentativen Punkte an ein Benutzerendgerät als Daten zur Bewertung, ob das generative Modell ordnungsgemäß trainiert wurde;
Generieren einer Vielzahl von Datenteilen aus dem generativen Modell und
Extrahieren von zweiten repräsentativen Punkten der generierten Daten unter Verwendung von Kernel-Herding,
Ausgeben der zweiten repräsentativen Punkte und
wobei, wenn eine Differenz zwischen den von der ersten Einheit zur Extraktion von repräsentativen Punkten extrahierten repräsentativen Punkten und den von der zweiten Einheit zur Extraktion von repräsentativen Punkten extrahierten repräsentativen Punkten größer als ein vorbestimmter Wert ist, bestimmt wird, dass das Training des generativen Modells nicht angemessen voranschreitet, und wobei, wenn eine Differenz zwischen den von der ersten Einheit zur Extraktion von repräsentativen Punkten extrahierten repräsentativen Punkten und den von der zweiten Einheit zur Extraktion von repräsentativen Punkten extrahierten repräsentativen Punkten kleiner als der vorbestimmte Wert ist, bestimmt wird, dass das Training des generativen Modells angemessen voranschreitet.

## Revendications

**1.** Dispositif d'apprentissage (10), comprenant :

une unité d'acquisition (131), configurée pour acquérir une pluralité d'ensembles de données de communication pour l'apprentissage ;
une unité (132) d'extraction de quantité de caractéristiques, configurée pour extraire des quantités de caractéristiques des données de communication ;
une unité d'apprentissage (1331), configurée pour entraîner un modèle génératif avec les quantités de caractéristiques des données de communication, le modèle génératif étant destiné à être utilisé par un dispositif de détection (20) pour détecter la présence ou l'absence d'une anomalie dans un trafic cible de détection dans un réseau (N) ;
**caractérisé par**
une première unité (1332) d'extraction de points représentatifs configurée pour extraire des points représentatifs des quantités de caractéristiques des données de communication en utilisant le rassemblement de noyaux ; et
une unité de sortie (1333), configurée pour générer les points représentatifs extraits par la première unité d'extraction de points représentatifs à un terminal utilisateur (3) en tant que données permettant d'évaluer si le modèle génératif a été correctement entraîné ;
une unité de génération (3311), configurée pour générer une pluralité d'ensembles de données à partir du modèle génératif, et
une seconde unité (3312) d'extraction de points représentatifs, configurée pour extraire des points représentatifs des données générées en utilisant le rassemblement de noyaux,
dans lequel l'unité de sortie (1333) génère les points représentatifs extraits par la seconde unité d'extraction de points représentatifs, et
dans lequel, si une différence entre les points représentatifs extraits par la première unité d'extraction de points représentatifs et les points représentatifs extraits par la seconde unité d'extraction de points représentatifs est supérieure à une valeur prédéterminée, il est déterminé que l'entraînement du modèle génératif ne progresse pas de manière appropriée, et dans lequel, si une différence entre les points représentatifs extraits par la première unité d'extraction de points représentatifs et les points représentatifs extraits par la seconde unité d'extraction de points représentatifs est inférieure à la valeur prédéterminée, il est déterminé que l'entraînement du modèle génératif progresse de manière appropriée.

2. Procédé d'apprentissage mis en œuvre par un dispositif d'apprentissage (10), le procédé d'apprentissage comprenant les étapes suivantes :

l'acquisition d'une pluralité d'ensembles de données de communication pour l'apprentissage ;
l'extraction de quantités de caractéristiques des données de communication ;
l'entraînement d'un modèle génératif avec les quantités de caractéristiques des données de communication, le modèle génératif étant destiné à être utilisé par un dispositif de détection (20) pour détecter la présence ou l'absence d'une anomalie dans un trafic cible de détection dans un réseau (N) ;
**caractérisé par**
l'extraction de points représentatifs des quantités de caractéristiques des données de communication en utilisant le rassemblement de noyaux ;
la génération des points représentatifs à un terminal utilisateur en tant que données permettant d'évaluer si le modèle génératif a été correctement entraîné ;
la génération d'une pluralité d'ensembles de données à partir du modèle génératif, et
l'extraction de seconds points représentatifs des données générées en utilisant le rassemblement de noyaux, la génération des seconds points représentatifs, et dans lequel, si une différence entre les points représentatifs extraits par la première unité d'extraction de points représentatifs et les points représentatifs extraits par la seconde unité d'extraction de points représentatifs est supérieure à une valeur prédéterminée, il est déterminé que l'entraînement du modèle génératif ne progresse pas de manière appropriée, et dans lequel, si une différence entre les points représentatifs extraits par la première unité d'extraction de points représentatifs et les points représentatifs extraits par la seconde unité d'extraction de points représentatifs est inférieure à la valeur prédéterminée, il est déterminé que l'entraînement du modèle génératif progresse de manière appropriée.

3. Programme d'apprentissage comprenant des instructions qui, lorsqu'elles sont exécutées par un ordinateur (1000), amènent l'ordinateur (1000) à mettre en œuvre les étapes consistant à :

acquérir une pluralité d'ensembles de données de communication pour l'apprentissage ;
extraire des quantités de caractéristiques des données de communication ;
entraîner un modèle génératif avec les quantités de caractéristiques des données de communication, le modèle génératif étant destiné à être utilisé par un dispositif de détection (20) pour détecter la présence ou l'absence d'une anomalie dans un trafic cible de détection dans un réseau (N) ;
**caractérisé par**
l'extraction de points représentatifs des quantités de caractéristiques des données de communication en utilisant le rassemblement de noyaux ; et
la génération des points représentatifs à un terminal utilisateur en tant que données permettant d'évaluer si le modèle génératif a été correctement entraîné ;
la génération d'une pluralité d'ensembles de données à partir du modèle génératif, et
l'extraction de seconds points représentatifs des données générées en utilisant le rassemblement de noyaux, la génération des seconds points représentatifs, et
dans lequel, si une différence entre les points représentatifs extraits par la première unité d'extraction de points représentatifs et les points représentatifs extraits par la seconde unité d'extraction de points représentatifs est supérieure à une valeur prédéterminée, il est déterminé que l'entraînement du modèle génératif ne progresse pas de manière appropriée, et dans lequel, si une différence entre les points représentatifs extraits par la première unité d'extraction de points représentatifs et les points représentatifs extraits par la seconde unité d'extraction de points représentatifs est inférieure à la valeur prédéterminée, il est déterminé que l'entraînement du modèle génératif progresse de manière appropriée.

Fig. 1

☐ FIRST 20 SAMPLES IN Kernel herding

○ 20 i.i.d SAMPLES GENERATED FROM DISTRIBUTION OF X

Fig. 2

Fig. 3

LEARNING TARGET NETWORK

(1) FEATURE AMOUNTS FOR LEARNING

HTTP
SSH
MQTT

(2) GENERATIVE MODEL (VAE ETC.)

(4) SAMPLED DATA FROM VAE ETC.

(3) REPRESENTATIVE POINT EXTRACTION BY kernel herding

(5) REPRESENTATIVE POINT EXTRACTION BY kernel herding

EP 4 092 581 B1

Fig. 4

LEARNING DEVICE — 10

CONTROL DEVICE — 13

ACQUISITION UNIT — 131

FEATURE AMOUNT EXTRACTION UNIT — 132

MODEL TRAINING UNIT — 133

TRAINING UNIT — 1331

REPRESENTATIVE POINT EXTRACTION UNIT — 1332

PRESENTATION UNIT — 1333

COMMUNICATION UNIT — 11

STORAGE UNIT — 12

VAE MODEL — 121

Fig. 5

DETECTION DEVICE — 20

CONTROL DEVICE — 23

ACQUISITION UNIT — 231

COMMUNICATION UNIT — 21

FEATURE AMOUNT EXTRACTION UNIT — 232

DETECTION UNIT — 233

STORAGE UNIT — 22

VAE MODEL — 121

Fig. 6

EVALUATION DEVICE ⌐30

CONTROL DEVICE ⌐33

MODEL EVALUATION UNIT ⌐331

DATA GENERATION UNIT ⌐3311

REPRESENTATIVE POINT EXTRACTION UNIT ⌐3312

PRESENTATION UNIT ⌐3313

COMMUNICATION UNIT ⌐31

STORAGE UNIT ⌐32

VAE MODEL ⌐121

Fig. 7

```
                    ┌──────────────┐
                    │    START     │
                    └──────┬───────┘
                           ▼
            ┌──────────────────────────┐
            │     ACQUIRE PACKETS      │  ∿S1
            └──────────┬───────────────┘
                       ▼
            ┌──────────────────────────┐
            │  EXTRACT TRAFFIC FEATURE │  ∿S2
            │         AMOUNTS          │
            └──────────┬───────────────┘
                       │
         ┌─────────────┴─────────────────────────────┐
         ▼  ⌐S3                                       ▼  ⌐S5
  ┌──────────────┐                      ┌──────────────────────────┐
  │    TRAIN     │                      │  EXTRACT REPRESENTATIVE  │
  └──────┬───────┘                      │         POINTS           │
         ▼  ⌐S4                         └──────────┬───────────────┘
  ┌──────────────────┐                             ▼  ⌐S6
  │ OUTPUT VAE MODEL │                 ┌──────────────────────────┐
  └──────┬───────────┘                 │  PRESENT REPRESENTATIVE  │
         │                             │         POINTS           │
         │                             └──────────┬───────────────┘
         ▼◄──────────────────────────────────────┘
  ┌──────────────┐
  │     END      │
  └──────────────┘
```

Fig. 8

```
        ┌─────────────┐
        │    START    │
        └──────┬──────┘
               │
               ▼
    ┌────────────────────────┐
    │    GENERATE DATA        │ ⌇S11
    │    FROM VAE MODEL       │
    └───────────┬────────────┘
                │
                ▼
    ┌────────────────────────┐
    │ EXTRACT REPRESENTATIVE  │ ⌇S12
    │       POINTS            │
    └───────────┬────────────┘
                │
                ▼
    ┌────────────────────────┐
    │ PRESENT REPRESENTATIVE  │ ⌇S13
    │       POINTS            │
    └───────────┬────────────┘
                │
                ▼
        ┌─────────────┐
        │     END     │
        └─────────────┘
```

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019220892 A

**Non-patent literature cited in the description**

- **Y. CHEN** ; **M. WELLING** ; **A. SMOLA**. Super-Samples from Kernel Herding. *Proceedings of the 26th Conference on Uncertainty in Artificial Intelligence (UAI)*, 2010, 109-116